# EUROPEAN PATENT SPECIFICATION

(11) **EP 0 607 949 B1**
(45) Date of publication and mention of the grant of the patent: **08.06.2011**
(21) Application number: 94100733.8
(22) Date of filing: 19.01.1994
(51) Int. Cl.: C08K 13/02

(54) **Method and resin composition for molding an optical connector ferrule**
Methode und Harzzusammensetzung zum Formen einer optischen Steckenfassung
Méthode et composition de résine pour mouler un bout de connecteur optique

(30) Priority: 20.01.1993 JP 2616893; 01.02.1993 JP 3747293; 22.11.1993 JP 31599393
(43) Date of publication of application: 27.07.1994
(73) Proprietor: Sumitomo Electric Industries, Ltd., Osaka-shi, Osaka 541 (JP)
(72) Inventor: Honjo, Makoto, c/o Yokohama Works of, Sakae-ku, Yokohama-shi, Kanagawa (JP); Yamanishi, Toru, c/o Yokohama Works of, Sakae-ku, Yokohama-shi, Kanagawa (JP)
(74) Representative: Grünecker, Kinkeldey, Stockmair & Schwanhäusser Anwaltssozietät

(56) References cited:
- DE-A- 1 570 879
- US-A- 4 292 268
- US-A- 4 701 479
- DATABASE WPI Derwent Publications Ltd., London, GB; AN 90-214330 & JP-A-2 145 416 (NIPPON CHEM IND) 4 June 1990

## Description

### BACKGROUND OF THE INVENTION

### 1. Field of the Invention

This invention relates generally to a resin composition and method for molding an optical connector ferrule.

### 2. Description of the Related Art

Optical connector ferrules are commonly used to provide positioning and support during the connection of optical fibers. Optical fibers are typically produced in the form of a multi-fiber cable wherein a plurality of optical fibers are integrated. In such a configuration, the plurality of optical fibers are positioned in parallel arrangement to each other and collectively coated with a common coating resin cover.

An optical connector ferrule is used to connect two multi-fiber cables by first stripping away the resin cover along the end of a multi-fiber cable in order to expose the individual optical fibers enclosed therein. The exposed portions of optical fibers are then inserted into the rear portion of the optical connector ferrule. Each optical fiber is individually inserted into and through a corresponding optical fiber insert hole that runs from the rear to the front of the optical fiber ferrule. The optical fibers is thereafter secured in their respective optical fiber insert holes by injecting an adhesive into the adhesive injection opening of the optical connector ferrule, which is located at the upper surface of the optical connector ferrule.

After two multi-fiber cables, each possessing the same number of optical fibers, have been inserted and secured in their respective optical connector ferrules, they are next connected to each other. This is accomplished by introducing fixing pins into the fixing pin insert holes located in the front portions of the two optical connector ferrules. In this manner, half of each fixing pin is inserted into a fixing pin insert hole of the first optical fiber ferrule, while the other half of each fixing pin is inserted into the corresponding fixing pin insert hole of the second optical fiber ferrule.

Because the optical connector ferrules are molded from identical molds, the fixing pin insert holes of the two optical connector ferrules should align with each other upon connection of the optical connector ferrules. Moreover, because the optical connector ferrules are molded from identical molds, the optical fiber insert holes, and thus the optical fibers enclosed therein, should also align with each other upon connection of the optical connector ferrules.

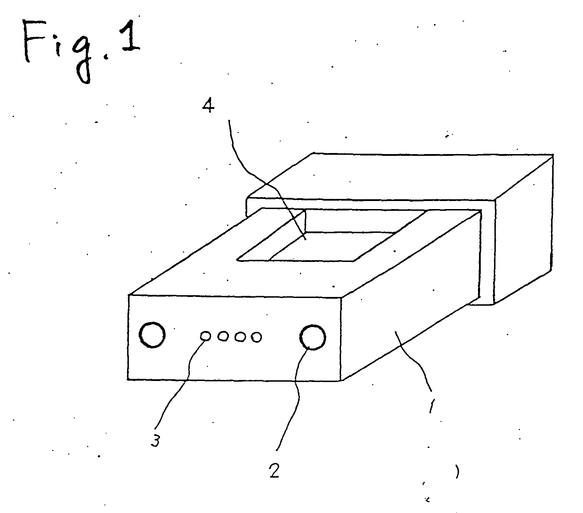

FIG. 1 is a perspective view showing one example of a optical connector ferrule produced by resin molding. Referring to FIG. 1, the first step in molding an optical connector ferrule entails the insertion of forming pins through the outer body of an optical connector ferrule mold 1 and into the mold's cavity. The inserted forming pins facilitate the molding of both fixing pin insert holes 2 and optical fiber insert holes 3 in the cavity. Two fixing pin insert holes 2 are preferably formed in an optical connector ferrule. The number of optical fiber insert holes 3 included in the optical connector ferrule will correspond to the number of optical fibers in the multi-fiber cable, since each optical fiber is individually inserted in a corresponding optical fiber insert hole 3.

The next step in molding an optical connector ferrule involves the injection of a thermosetting resin composition into the cavity by a method commonly known as transfer molding. This is accomplished by first melting the resin composition in a pot situated in an accompanying molding machine. The resin composition is next pressurized by a plunger also situated in the molding machine. The pressure from the plunger advances the resin composition to be injected into the cavity through a runner and an injection gate thereof. The injection process is terminated after the cavity is completely charged with resin composition. This conventional transfer molding method is characterized in that as the resin composition passes through the gate of the cavity, the resin composition preferably possesses a temperature from 160 °C to 190 °C, a melting viscosity from 70 Pas to 150 Pas, and an injection velocity from 0.03 cc/sec to 5.0 cc/sec. The cross-section of the gate is preferably from 0.2 mm² to 0.3 mm².

A conventional resin composition typically comprises a base resin, such as a thermosetting epoxy resin, and silica powder. The resin composition, which is powdery before hardening, is melted in the pot of the molding machine, pressurized by the plunger, and injected into the cavity through the runner that leads to the gate of the cavity. The resin composition is thereafter hardened.

The silica powder, which serves primarily as a filler for the resin composition, generally comprises from 70 wt% to 80 wt% (i.e., weight percentage) of the entire resin composition. The silica is typically crushed-shaped, with a maximum diameter ranging from 150 µm to 200 µm, and a peak diameter ranging from 20 µm to 30 µm. As used in this patent, the "peak diameter" is hereinafter defined as the most frequently displayed diameter among the silica powder particles.

After the resin composition has been injected into the cavity it is allowed to solidify. Because the silica powder possesses a small coefficient of linear expansion, the resin composition only undergoes a small amount of molding shrinkage during solidification. The small ratio of molding shrinkage allows for the production of extremely precise molding products.

However, in the above method for forming optical connector ferrules, the large amount of silica powder filler used in the resin composition causes a corresponding decrease in the fluidity of the resin composition as it enters in the cavity. A conventional method for resolving this problem is to increase the pressure exerted on the resin composition in order to force the resin composition through the gate of the cavity. Consequently, another problem arises inasmuch as the increased pressure exerted by the molding machine displaces the forming pins inserted in the cavity, thereby distorting the placement of the fixing pin insert holes 2 and the optical fiber insert holes 3. Moreover, the poor fluidity of the resin composition causes an additional problem inasmuch as uneven flow may result, thus producing deformation in the molded optical connector ferrule.

DE-A-1570879 discloses a resin composition with improved thermal properties, particularly with regard to heat conductivity and heat expansion. This disclosure describes a resin composition containing 100 weight parts of epoxy, 25 to 30 weight parts of tetrahydrophthalic anhydride and a maximum of 320 weight parts of quartz powder, wherein individual particles comprise sizes up to 10 µm and beginning with 35 µm.

US-A-4292268 discloses injection molding of liquid epoxy resins which is facilitated by adding an organic acid plus a siliceous filler to the curable epoxy resin system which thickens and thereby precludes leaking of resin from the mold.

US-A-4 701 479 discloses an epoxy resin-based composition for encapsulation of semiconductor devices, wherein the inorganic filler in the epoxy resin-based composition is a combination of two kinds of quartz powder of which one is a quartz powder having a spherical particle form and the other is a pulverized quartz powder in a specified proportion. The resin composition is highly flowable and capable of giving encapsulation of semiconductor devices with little fins having small thermal expansion coefficient and is highly resistant against crack formation.

JP-A-2145416 describes an anti-burr, sealing resin composition for semiconductors containing fine fused globular silica filler having specified particle sizes and specific surface area. The fused globular silica has 10 to 30 microns mean particle diameter and comprises 8 to 30 wt% of fine particles (3 microns or less) and 5 to 30 wt% of coarse particles (48 microns or more). The sealing resin composition comprises 60 to 85 wt% of filler.

### SUMMARY OF THE INVENTION

It is, therefore, an object of the present invention to provide a resin composition according to claim 1 having a suitable melting viscosity and a.suitable fluidity for overcoming the above mentioned problems associated with injection molding of an optical connector ferrule. In the present invention, the resin composition for molding an optical connector ferrule includes a base resin and a silica powder filler, wherein the silica powder filler comprises between 75 wt% and 90 wt% of the resin composition and has a particle size distribution in which the maximum diameter is 100 µm and the peak diameter size is from 10 µm to 20 µm.

It is another object of the present invention to provide a method for molding an optical connector ferrule by comprising the steps of forming a fixing pin insert hole and an optical fiber insert hole in a cavity by use of forming pins, injecting a resin composition into the cavity by a transfer molding method (wherein the melting viscosity of the resin composition is from 5 Pa s to 50 Pa s when the resin composition passes through the gate of the cavity), and hardening the resin.

It is a further object of the present invention to provide a method for molding an optical connector ferrule by comprising the steps of forming a fixing pin insert hole and an optical fiber insert hole in a cavity by use of forming pins, injecting a resin composition into the cavity by a transfer molding method (wherein the melting viscosity of the resin composition is from 5 Pa s to 50 Pa s as the resin composition passes through the gate of the cavity, and wherein the resin composition includes a base resin and a silica powder filler that comprises from 75 wt% to 90 wt% of the resin composition and has a particle size distribution in which a maximum diameter is 100 µm and the peak diameter size ranges from 10 µm to 20 µm), and hardening the resin.

This and other objects, features, and advantages of the present invention will become apparent from the following detailed description when taken in conjunction with the accompanying drawings which illustrate, by way of example, the principles of the present invention.

### BRIEF DESCRIPTION OF THE DRAWINGS

The accompanying drawings illustrate the invention. In the drawings:
Fig. 1 is a perspective view of a optical connector ferrule; and
Fig. 2 is a perspective view of a optical connector ferrule showing a direction of pressuring a fixing pin.

### DETAILED DESCRIPTION OF THE INVENTION

According to the present invention, a method and resin composition for molding an optical connector ferrule are provided wherein the resin composition can be injected into the cavity at low pressure.

According to the method disclosed by the present invention, a resin composition should be used which possesses a melting viscosity from 5 Pa s to 50 Pa s as it passes through the gate of the cavity. The melting viscosity should not drop below 50 poise, since such a low melting viscosity may cause excessive burr to form in the aperture of the cavity. The resin should also possess a temperature from 160 °C to 190 °C and an injection velocity between 0.03 and 5.00 cc/sec. The cross-section of the gate should be from 0.3 to 2.0 mm².

According to the present invention, a resin composition is also provided for molding an optical connector ferrule. The resin composition for molding of the present invention includes a base resin and a silica powder. The silica powder serves primarily as a filler and constitutes from 75 wt% to 90 wt% of the resin composition. The large percentage of silica powder filler in the resin composition increases the precision with which the optical connector ferrule can be produced, given the small coefficient of linear expansion and little molding shrinkage displayed by the silica powder filler.

The maximum particle diameter desired for the particle size distribution of the silica powder filler is 100 µm or less, with the peak size diameter ranging from 10 µm to 20 µm. Moreover, the silica powder filler is preferably grain-shaped or spherical (the spherical shape is accomplished by rounding off the corners of crushed-shaped silica powder). Generally, grain-shaped and spherical silica powder fillers improve the fluidity of the resin composition so as to insure than an even flow of resin material is transferred into the cavity. Moreover, the improved fluidity of the resin composition allows the optical connector ferrule to be molded without causing an uneven flow of resin composition, which can result in deformation of the molded optical connector ferrule.

The most common type of base resin that can be used in the resin composition of the present invention is epoxy resin. Other thermosetting resins that are preferred for the present invention include phenolic resin, urea resin, melamine resin, silicon resin, or the like.

In addition to the base resin and silica powder filler, the resin composition may also include a silane coupling agent for promoting stronger adhering strength between the silica powder filler and the base resin. Moreover, the resin composition may also include a lubricant that will improve the fluidity of the resin as it is passes through the runner and into the cavity. Preferred lubricants include wax or a stearate (e.g., lead stearate, zinc stearate, or the like). The effectiveness of the lubricant is minimal where the amount of lubricant included in the resin composition constitutes less than 0.3 wt% of the resin composition. However, excessive use of a lubricant (i.e., where the lubricant constitutes more than 1.0 wt% of the resin composition) may result is an inferior optical connector ferrule being produced. For example, excessive lubricant may form on the surface of the cavity or cause the adhering strength between the silica powder filler and the base resin to decrease.

Finally, if necessary, accelerator, fire retardant, release agent, carbon, or the like may be added to the resin composition.

Descriptions of preferred embodiments are provided below, showing the effects of the present invention.

### EXAMPLES OF PREFERRED EMBODIMENTS

### First Embodiment

In the first embodiment, a mold cavity in the shape of a optical connector ferrule, with forming pins inserted into the cavity, was used. The cavity was connected to a transfer molding machine. In the transfer molding machine, a molding resin composition comprising an epoxy resin was pressurized for five minutes at a temperature of 180°C. The resin composition was injected into the cavity through a gate with a cross-section of 1 mm². The resin composition was injected at an injection speed of 0.5 cc/sec and a injection pressure of 100 kg/cm². The melting viscosity of the resin composition was set to five different levels, ranging from 4 to 60 Pa s, as indicated in Table I. In the first three resin compositions, the melting viscosity levels fell with the scope of the present invention; the last two resin compositions served as comparative examples, containing melting viscosities that fell outside the scope of the invention. After injection was complete, the resin compositions were hardened to produce a multi-fiber optical connector ferrule as shown in Fig. 1.

In order to accurately test the transmission quality of the resulting optical connector ferrules, twenty optical connector ferrules were prepared pursuant to each of the five viscosity levels specified in Table I (i.e., a total of 100 optical connector ferrules was prepared). The test consisted of inserting and fixing a single mode optical fiber having the outside diameter of 125 µm into each of the optical connector ferrules. The optical connector ferrules were connected to a master connector. The transmission loss of each optical connector ferrule was then measured in the wavelength of 1.3 µm. The average transmission loss for the optical connector ferrules prepared pursuant to each viscosity level is displayed in Table I.

In order to measure the amount of deformation caused by the resin composition's shrinkage during its solidification, the camber value of each optical connector ferrule was measure after the injection process was completed. As used in this patent, "camber volume" is hereinafter defined as the distance from the cavity wall to the center portion of the lower surface of the optical connector ferrule, as measured perpendicularly from the cavity wall. The camber volume of each optical connector ferrule was measured by a surface roughness meter. In addition, after leaving the optical connector ferrule in for one year, the deformation volume thereof was measured by the surface roughness meter. The resulting measurements are illustrated in Table I.

As shown in Table I, the optical connector ferrules molded pursuant to the molding method of the present invention displayed average connection losses of less than 0.35 dB and camber volumes of less than 0.4 µm. Moreover, the deformation volume after 1 year was less than 0.2 µm and a burr was not produced. By contrast, comparative example 5 displayed an average connection loss of 0.50 dB and a camber volume of 0.7 µm. A burr was produced in comparative example 4.

**Table I**

| | Method according to the present invention | | | Comparative Examples | |
|---|---|---|---|---|---|
| | 1 | 2 | 3 | 4 | 5 |
| Melting Viscosity (poise) | 50 | 200 | 500 | 40 | 600 |
| Average of connection loss (dB) | 0.28 | 0.31 | 0.34 | 0.29 | 0.50 |
| Camber Volume (µm) | 0.2 | 0.3 | 0.4 | 0.2 | 0.7 |
| Deformation Volume after 1 Year (µm) | <0.1 | 0.1 | 0.2 | <0.1 | 0.4 |
| is burr easily produced? | No | No | No | Yes | No |

### Second Embodiment

In the second embodiment, five different varieties of silica powder filler were tested in five respective resin compositions pursuant to the present invention. In addition, three conventional varieties of silica powder filler were also tested under the same conditions for comparative reasons. The weight percentage, shape, and particle size distribution of each of the eight varieties of silica powder filler are indicated in Table II. The base resin in each of the resin compositions was a phenol novolac type epoxy resin. A very small quantity of a silane coupling agent, lubricant, accelator, and carbon was also added to each of the resin compositions. Each resin composition was then combined and mixed in a heat roll. Thereafter, each mixed resin composition was cooled down and crushed in preparation of molding the optical connector ferrules.

The molding resin composition was then heated to a temperature of 180 °C for five minutes before being pressurized from the transfer molding machine and into the cavity under an injection pressure of 100 kg/cm² to produce a multi-fiber optical connector ferrule as shown in Fig. 1.

In order to accurately test the characteristics of the resulting optical connector ferrules, twenty optical connector ferrules were prepared pursuant to each of the eight silica powder filler varieties specified in Table II (i.e., a total of 160 optical connector ferrules was prepared).

In order to measure the amount of deformation caused by the resin composition's shrinkage during its solidification, the camber volume of each optical connector ferrule was measured after the injection process was completed. A surface roughness meter was used to measure the camber volume of each optical connector ferrule. In addition, after leaving the optical connector ferrule in for one year, the deformation volume thereof was measured by the surface roughness meter.

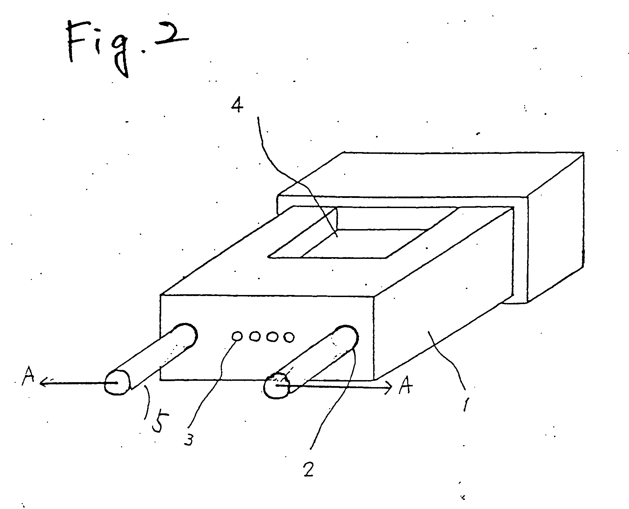

As shown in Figure 2, in order to measure the rupture strength of the fixing pin insert hole 2 in each of the optical connector ferrules, the first end of a stainless steel fixing pin 5 was inserted 5.5 mm into the cavity to form the fixing pin insert hole 2. The second end of the fixing pin, which projected 5 mm from the end face of the optical connector ferrule, was subjected to a pressure speed of 5 mm/min in the direction A. The resulting measurements for each optical connector ferrule are displayed in Table II.

As Table II indicates, in the optical connector ferrules prepared according to the resin composition of the present invention, the camber volume was less than 0.4 µm, the deformation volume after 1 year was less than 0.2 µm, the strength of the fixing pin was more than 1.0 kg, and the ratio of the molding shrinkage was less than 0.4 %. Moreover, the optical connector ferrules prepared according to the present invention exhibited low coefficients of linear expansion and little molding shrinkage.

By contrast, comparative example 6, which included a content rate of silica powder of 70 wt%, displayed a large coefficient of linear expansion. Both comparative example 7 (which used a crushed-shape silica) and comparative example 8 (which used silica with a maximum particle diameter of 110 µm and the central particle diameter of 25 µm) exhibited large camber volumes and deformation volumes after 1 year.

In order to properly test the connection quality of the optical connector ferrules, a single mode optical fiber, having an outside diameter of 125 µm, was inserted and fixed to the optical connector ferrule so as to measure the connection loss thereof in the wavelength of 1.3 µm. The average connection loss for each of the optical connector ferrules prepared according to the present invention was less than 0.3 dB.

**Table II**

| | Present invention | | | | | Comparative Example | | |
|---|---|---|---|---|---|---|---|---|
| | 1 | 2 | 3 | 4 | 5 | 6 | 7 | 8 |
| Weight percentage of silica (wt %) | 75 | 80 | 80 | 90 | 80 | 70 | 80 | 80 |
| Maximum diameter of silica (µm) | 80 | 80 | 100 | 80 | 100 | 80 | 80 | 110 |
| Center diameter of silica (µm) | 15 | 15 | 20 | 15 | 20 | 15 | 15 | 25 |
| Shape of silica | spherical | spherical | spherical | spherical | spherical | spherical | crushed -shape | spherical |
| Lubricant (wax) | - | - | - | - | 0.3 | - | - | - |
| Coefficient of linear expansion (less than Tg) (°C⁻¹) | 1.7 x 10⁻⁵ | 1.4 x 10⁻⁵ | 1.4 x 10⁻⁵ | 1.0 x 10⁻⁵ | 1.4 x 10⁻⁵ | 2.0 x 10⁻⁵ | 1.4 x 10⁻⁵ | 1.4 x 10⁻⁵ |
| Molding shrinkage(%) | 0.4 | 0.3 | 0.3 | 0.2 | 0.3 | 0.6 | 0.3 | 0.3 |
| Camber volume (µm) | 0.2 | 0.3 | 0.4 | 0.4 | 0.3 | 0.2 | 0.7 | 0.7 |
| Deformation volume after 1 year (µm) | <0.1 | 0.1 | 0.2 | 0.2 | 0.1 | <0.1 | 0.5 | 0.5 |
| Strength of fixing hole (Kg) | 1.7 | 1.5 | 1.5 | 1.0 | 1.3 | 1.8 | 1.5 | 1.5 |

### Third Embodiment

In the third embodiment, a resin composition was prepared that included an epoxy resin, a silica powder filler, a silane coupling agent, and a lubricant. The silica powder filler contained in the resin composition possessed the following attributes:

| | |
|---|---|
| Weight percentage of silica: | 80 wt% |
| Maximum diameter of silica: | 100 µm |
| Center diameter of silica: | 20 µm |
| Shape of silica: | spherical |
| Coefficient of linear expansion: | 1.4x10⁻⁵ (°C⁻¹) |
| Rate of molding shrinkage: | 0.3 % |

The resin composition was molded to produce twenty optical connector ferrules by a transfer molding method performed under the same conditions as describe in the first example above. An optical fiber was then inserted into and fixed to the optical connector ferrule by an adhesive in order to measure the connection loss, the camber volume, the deformation volume after one year, the strength of the fixing hole, and the ease with which the burr was produced. The average results for the optical connector ferrules produces pursuant to these conditions are as follows.

| | |
|---|---|
| Average of Connection Loss: | 0.30 (dB) |
| Camber Volume: | 0.2 (µm) |
| Deformation Volume After 1 Year: | < 0.1 (µm) |
| Strength of Fixing Pin: | 1.5 (kg) |
| Was it easy to produce Burr ?: | No |

As described above, an optical connector ferrule produced according to the method provided in the present invention exhibits superior results over optical connector ferrules produced according to conventional methods. For example, the improvement in the fluidity of a resin produced according to the present invention imparts a greater stability on the forming pin inserted into the cavity, allows for superior transfer of the resin, and causes the optical connector ferrule to undergo less deformation over time.

In addition, an optical connector ferrule produced from the resin composition of the present invention exhibits superior results over optical connector ferrules produced according to conventional compositions. For example, the precision with which the size of an optical connector ferrule can be produced is increased, given the small coefficient of linear expansion and little molding shrinkage displayed by the claimed resin composition. Further, the fluidity of the resin is improved so as to make the transfer of the resin to the cavity less difficult. The improved fluidity of the resin composition also results in an optical connector ferrule which will undergo less deformation over time.

Finally, pursuant to the present invention a silane coupling agent may be included in the resin composition for promoting stronger adhering strength between the silica powder filler and the base resin. A lubricant may also be added to the resin composition so as to further improve the fluidity between the cavity and the resin.

## Claims

1. A resin composition for molding an optical connector ferrule comprising:
a base resin;
a silica powder filler, said silica powder filler constituting from 75 wt% to 90 wt% of said resin composition, and having a particle size distribution with a maximum diameter of 100 µm or less and a peak value from 10 µm to 20 µm;
a silane coupling agent;
a lubricant constituting from 0.3 wt% to 1.0 wt% of said resin composition; and
a release agent.

2. A resin composition for molding an optical connector ferrule as recited in claim 1, wherein said base resin is an epoxy resin and silica powder filler comprises spherical shaped particles.

3. A method for molding an optical connector ferrule comprising the steps of:
forming a fixing pin insert hole and an optical fiber insert hole in a mold cavity by inserting a forming pin through the outer wall of said mold cavity,
injecting a resin composition as claimed in claim 1 or 2 into said cavity by transfer molding, wherein the melting viscosity of said resin composition is from 5 Pas to 50 Pas when said resin composition passes through a gate of said cavity, and
hardening said resin,
wherein the temperature of said resin composition is from 160°C to 190°C, the injection speed of said resin composition is from 0.03 to 5.00 cc/sec, and the cross-section of said gate is from 0.3 to 2.0 mm².

## Patentansprüche

1. Harzzusammensetzung zum Formen einer optischen Verbinderfassung, umfassend:
ein Basisharz;
einen Siliziumdioxidpulverfüllstoff, wobei der Siliziumdioxidpulverfüllstoff aus 75 Gew.-% bis 90 Gew.-% der Harzzusammensetzung besteht und eine Teilchengrößenverteilung mit einem Maximaldurchmesser von 100 µm oder weniger und einen Spitzenwert von 10 µm bis 20 µm aufweist;
einen Silanhaftvermittler;
ein Schmiermittel, das aus 0,3 Gew.-% bis 1,0 Gew.-% der Harzzusammensetzung besteht; und
ein Trennmittel.

2. Harzzusammensetzung zum Formen einer optischen Verbinderfassung nach Anspruch 1, wobei das Basisharz ein Epoxidharz ist und der Siliziumdioxidpulverfüllstoff kugelförmige Teilchen umfasst.

3. Verfahren zum Formen einer optischen Verbinderfassung, umfassend die nachfolgenden Schritte:
Bilden eines Einsetzloches für einen Fixierstift und eines Einsetzloches für eine optische Faser in einem Formungshohlraum durch Einsetzen eines Bildestiftes durch die Außenwand des Formungshohlraumes,
Einspritzen einer Harzzusammensetzung nach Anspruch 1 oder 2 in den Hohlraum durch Transferformung, wobei die Schmelzviskosität der Harzzusammensetzung von 5 Pas bis 50 Pas reicht, wenn die Harzzusammensetzung durch einen Einlauf des Hohlraumes hindurchtritt, und
Härten des Harzes,
wobei die Temperatur der Harzzusammensetzung von 160 °C bis 190 °C reicht, wobei die Einspritzgeschwindigkeit der Harzzusammensetzung von 0,03 bis 5,00 cm³/s reicht und der Querschnitt des Einlaufes von 0,3 bis 2,0 mm² reicht.

## Revendications

1. Composition de résine pour mouler un bout de connecteur optique, comprenant :
une résine de base ;
une charge pulvérulente de silice, ladite charge pulvérulente de silice constituant de 75 % en poids à 90 % en poids de ladite composition de résine, et ayant une distribution granulométrique d'un diamètre maximal de 100 µm ou moins et un pic de 10 µm à 20 µm ;
un agent de couplage au silane ;
un lubrifiant constituant de 0,3 % en poids à 1,0 % en poids de ladite composition de résine ; et
un agent anti-adhésif.

2. Composition de résine pour mouler un bout de connecteur optique selon la revendication 1, dans laquelle ladite résine de base est une résine époxy et une charge pulvérulente de silice comprend des particules de forme sphérique.

3. Procédé de moulage d'un bout de connecteur optique comprenant les étapes consistant à :
former un trou d'insertion pour la broche de fixation et un trou d'insertion pour la fibre optique dans une cavité du moule en insérant une broche de formation à travers la paroi externe de ladite cavité du moule,
injecter une composition de résine selon la revendication 1 ou 2 dans ladite cavité par moulage par transfert, où la viscosité en fusion de ladite composition de résine est de 5 Pas à 50 Pas quand ladite composition de résine passe à travers une grille de ladite cavité, et
durcir ladite résine,
dans lequel la température de ladite composition de résine est de 160 °C à 190 °C, la vitesse d'injection de ladite composition de résine est de 0,03 à 5,00 cc/sec, et la section transversale de ladite grille est de 0,3 à 2,0 mm².
